# EUROPEAN PATENT APPLICATION

(11) **EP 4 574 677 A1**
(43) Date of publication of application: **25.06.2025**
(21) Application number: 23219160.1
(22) Date of filing: 21.12.2023
(51) Int. Cl.: B64D 37/20, B64D 37/30, F02M 37/00, F02C 7/22, F02C 7/232, B60L 55/00, F02C 3/22, F17C 13/00, F02M 21/02, B64F 1/35, B64F 1/36, B64D 41/00

(54) **FUEL SUPPLY ARRANGEMENT, VEHICLE, EXTERNAL ENERGY CONVERSION DEVICE AND ENERGY SYSTEM COMPRISING SAME**

(71) Applicant: Airbus Operations GmbH, 21129 Hamburg (DE)
(72) Inventor: Konigorski, Detlev, 21129 Hamburg (DE)

(57) **Abstract**

A fuel supply arrangement (3) for a vehicle (2), in particular an aircraft, a vehicle (1), in particular an aircraft, comprising a fuel supply arrangement (3), an external fuel conversion device (4), in particular for ground based and/or stationary fuel conversion of a fuel (F) for a vehicle (1), such as an aircraft, and an energy system (2) are provided, wherein the fuel supply arrangement (3) comprises a fuel reservoir (9) for storing a fuel (F), such as a hydrogen tank for storing hydrogen as the fuel (F), a main fuel outlet (22) for fuelling an internal fuel conversion device (11), such as a propulsion unit (5) and/or fuel cell, of the vehicle (2), an auxiliary fuel outlet (23) configured to be connected to an external fuel conversion device (4), such as a cogeneration plant for supplying a ground installation with electrical power (E) and/or thermal power (H), and a fuel line (10) leading from a reservoir outlet of the fuel reservoir (9) to the main fuel outlet (22), wherein the auxiliary fuel outlet (23) is connected to the fuel line (10) via a fuel junction (12) arranged between the reservoir outlet and the main fuel outlet (22), and wherein the external fuel conversion device (4) comprises an auxiliary fuel inlet (24) configured to be connected to the auxiliary fuel outlet (23).

## Description

### Technical Field

The present disclosure relates to the field of alternative fuel systems for aircrafts and respective energy systems for using alternative fuels, such as hydrogen. In particular, the disclosure relates to a fuel supply arrangement for a vehicle, in particular an aircraft, to a vehicle, in particular an aircraft, comprising a fuel supply arrangement, to an external fuel conversion device, in particular for ground based and/or stationary fuel conversion of a fuel for a vehicle, such as an aircraft, and to an energy system.

### Technical Background

Aircrafts using alternative fuels, for example, hydrogen powered fuel cell aircrafts, are an interesting alternative to conventional aircraft propulsion and also for power generation, in that the alternative fuels may replace conventional fuels, such as kerosene, for operating any fuel conversions device on the aircraft, including propulsion units and auxiliary power units (APUs). Certain alternative fuels, such as hydrogen, do not emit carbon dioxide and thus are seen as a potential pathway to a more carbon emission free sustainable aviation. However, operating aircrafts based on alternative fuels involves new challenges for handling such fuels, especially with regard to hydrogen, due to its high fugacity, which can be controlled by cryogenic storing means.

EP 4 187 141 A1, for example, suggests a hydrogen tank, preferably a tank for storing liquid hydrogen at low pressure in cryogenic conditions, comprising at least one system for capturing gaseous hydrogen, this system being provided with absorbent charges capable of capturing gaseous hydrogen, the absorbent charges being linked to at least part of a wall of the tank and/or to a skin arranged on an external face of the tank and/or an external envelope intended to implement an auxiliary function, the system having a reduced mass and being capable of retaining and storing gaseous hydrogen which could escape of said tank so as to prevent it from spreading into the environment of said tank, the captured gaseous hydrogen being able to be released subsequently by said system.

EP 4 194 342 A1 relates to storing cryogenic hydrogen on an aircraft. In order to enlarge a tank volume of a hydrogen powered aircraft, the invention proposes an aircraft tank for storing cryogenic which is configured as a non-circular dorsal tank. Preferably, the aircraft tank is configured as a conformal fuel tank fitted to an outer contour of an aircraft fuselage. Further, an aircraft provided with such aircraft tank has been described.

EP 4 059 760 A1 describes a hydrogen storage system comprising a hydrogen tank and a system for controlling hydrogen evaporation in the hydrogen tank. This control system comprises a hydrogen discharge pipe connected to the hydrogen tank, on the one hand, and to a controllable valve, on the other hand, as well as a processing unit configured to control the valve as a function of the pressure in the tank. The hydrogen storage system further comprises a fuel cell permanently connected to the hydrogen tank and the processing unit being electrically powered by the fuel cell.

US 2015/336680 A1 deals with a tank system for the cryogenic storage of hydrogen including a tank structure with at least one hollow body for accommodating liquid hydrogen and at least one insulating means, which encloses the tank structure, for insulating the at least one hollow body. The tank structure has an exterior shape that is integrable in a load-bearing primary structure of an aircraft. The tank structure is load bearing and is designed to at least partially absorb a load introduced into the primary structure. This makes it possible to achieve a particularly efficient design of an aircraft in which the fuselage of the aircraft is not divided into two parts by the hydrogen tank integrated therein, can be arranged near the centre of gravity, and essentially does not increase the additional weight of the aircraft.

Systems and methods for handling hydrogen, as known from the prior art, may not fully satisfy certain requirements regarding operation of the aircrafts. This is particularly the case in view of that the systems do not only have to be merely regarded under operating conditions, but also under dormancy conditions, which for example demand that an aircraft should be able to be dormant in a parking position for 12 hours without losing hydrogen. In order to meet such conditions and further satisfy technical specifications, the known systems require additional installation space, weight, and power offtake for maintaining cryogenic conditions. This in turn may lead to thermal insulation and weight issues, competing with flight range and passenger number requirements.

### Summary

It may thus be seen as an object to facilitate usage of alternative fuels, such as hydrogen. Furthermore, it can be seen as an object, to provide a way of using hydrogen for powering aircrafts without overly compromising their flight range and transport capabilities. These objects are at least partly achieved by the subject-matter of the independent claims.

According to an aspect, a fuel supply arrangement for a vehicle, such as an aircraft, is provided, comprising a fuel reservoir for storing a fuel, such as a hydrogen tank for storing hydrogen as the fuel, a main fuel outlet for fuelling an internal fuel conversion device, such as a propulsion unit and/or fuel cell, of the vehicle, an auxiliary fuel outlet configured to be connected to an external fuel conversion device, such as a cogeneration plant for supplying a ground installation with electrical and/or thermal power, and a fuel line leading from a reservoir outlet of the fuel reservoir to the main fuel outlet, wherein the auxiliary fuel outlet is connected to the fuel line via a fuel junction arranged between the reservoir outlet and the main fuel outlet.

A vehicle, in particular an aircraft, is provided, comprising a corresponding fuel supply arrangement.

An external fuel conversion device, in particular for ground based and/or stationary fuel conversion of a fuel for a vehicle, such as an aircraft, is provided, comprising an auxiliary fuel inlet configured to be connected to an auxiliary fuel outlet of a corresponding fuel supply arrangement according to at least one of claims and/or of a corresponding vehicle.

An energy system comprising a corresponding fuel supply arrangement according to at least one of claims, a corresponding vehicle, and/or a corresponding external fuel conversion device is provided.

The proposed solution provides an alternative approach for reducing efforts in hydrogen storing for all kinds of vehicles, including but not limited to aircraft. This includes energy systems for aircrafts comprising fuel cells for aircraft propulsion and/or as APUs. Compared to the prior art, the proposed solution allows the fuel supply arrangement not to be dormant, but to continuously contribute to environmentally friendly energy conversion, thus reducing the need of complex technical solutions for enabling long dormancy times.

Further developments can be derived from the dependent claims and from the following description. Features described with reference to devices and arrangements may be implemented as method steps, or vice versa. Therefore, the description provided in the context of the fuel supply arrangement, external fuel conversion device, energy system and/or vehicle applies in an analogous manner also to respective methods. In particular, the functions of the fuel supply arrangement, external fuel conversion device, energy system and/or vehicle and of their or its, respectively, components may be implemented as method steps of respective methods and the method steps may be implemented as functions of the fuel supply arrangement, external fuel conversion device, energy system and/or vehicle.

According to an embodiment of a fuel supply arrangement, the junction comprises at least one switch valve for switching a fuel flow from the reservoir outlet to the main fuel outlet and/or the auxiliary fuel outlet. The switch valve allows for controlled selection of the main fuel outlet and the auxiliary fuel outlet for releasing the fuel. This helps in increasing controllability and flexibility of the fuel supply arrangement.

According to an embodiment of a fuel supply arrangement, the switch valve allows for gradual switching of the fuel flow. The amount of fuel provided to the main fuel outlet and/or the auxiliary fuel outlet can thus be adjusted to respective requirements. This helps in further increasing controllability and flexibility of the fuel supply arrangement.

According to an embodiment of a fuel supply arrangement, the switch valve allows for a steplessly variable switching of the fuel flow. Hence, the amount of fuel provided to the main fuel outlet and/or the auxiliary fuel outlet can be accurately and swiftly adjusted to respective requirements. This further helps in increasing controllability and flexibility of the fuel supply arrangement.

According to an embodiment of a fuel supply arrangement, the fuel junction is arranged in the vicinity of the main fuel outlet. Fuel can be branched off the fuel line preferably as close as possible to the internal fuel conversion device. Thereby, in particular cryogenic conditions can be maintained in the fuel line up to a point relatively close to the main fuel outlet. This helps in maintaining readiness and operability of the fuel supply arrangement.

According to an embodiment of a fuel supply arrangement, the fuel junction is arranged within the internal fuel conversion device. For example, the fuel junction may be arranged within or outside nacelle at least partially enclosing the fuel conversion device which may be provided as a fuel cell system and/or gas turbine. Thereby, in particular cryogenic conditions can be maintained in the fuel supply arrangement between the fuel reservoir up to and preferably including the fuel conversion device. This further helps in maintaining readiness and operability of the fuel supply arrangement.

According to an embodiment of a fuel supply arrangement, the fuel junction comprises the main fuel outlet and/or the auxiliary fuel outlet. In other words, the main fuel outlet and/or the auxiliary fuel outlet may be integrated into the fuel junction. Thereby, compactness of the fuel supply arrangement may be improved.

According to an embodiment of a fuel supply arrangement, the fuel supply arrangement further comprises at least one sensor for providing at least one measurement value representing a temperature value and/or pressure value of the fuel and/or the fuel supply arrangement. The measurement value can be used for adjusting the fuel flow provided to the main fuel outlet and/or the auxiliary fuel outlet. This helps in enhancing operability and flexibility of the fuel supply arrangement.

According to an embodiment of a fuel supply arrangement, the fuel supply arrangement further comprises a control unit configured to adjust an auxiliary fuel flow discharged from the auxiliary fuel outlet based on the at least one measurement value. The control unit may be connected to the at least one sensor via a respective energy and/or information line. Respective control mechanisms can be implemented by means of the control unit for operating the fuel supply arrangement according to respective conditions, demands and requirements, including communications with an external fuel conversion device and/or facilities connected thereto for managing fuel and/or energy consumption.

According to an embodiment of a fuel supply arrangement, the control unit is configured to keep the at least one measurement value within a pre-defined value range, and/or above or below a predefined value limit. This might be particularly of advantage if certain pressure and/or temperature conditions have to be maintained in the fuel supply arrangement and certain components thereof, such as the fuel reservoir. For maintaining required conditions, the switch valve may function as a two-way or three-way discharge valve. Thereby, operability and flexibility of the fuel supply arrangement may be further improved.

According to an embodiment of an external fuel conversion device, the external fuel conversion device is configured to convert the fuel received through the auxiliary fuel input and to provide electrical and/or thermal power to a ground installation, such as an airport. The external fuel conversion device may thus serve as a or at least part of a local supply facility for powering and/or heating the ground installation. This helps in improving decentralised energy supply.

According to an embodiment of an external fuel conversion device, the external fuel conversion device further comprises a metering unit for metering the fuel received through the auxiliary fuel input and/or the electrical and/or thermal power provided. The metering unit can help in monetarising consumption of fuel for the auxiliary fuel input as or the electrical and/or thermal power provided by the external fuel conversion device. This helps in integrating the fuel supply arrangement and any vehicle comprising same into an energy system.

### Brief Description of the Drawings

The subject matter will hereinafter be described in conjunction with the following drawing figures, wherein like numerals denote like elements, and wherein:
Fig. 1 is a schematic illustration of an energy system comprising a vehicle in the form of an aircraft provided with a fuel conversion arrangement connected to an external fuel conversion device powering a ground installation.
Fig. 2 is a schematic block diagram of the energy system shown in Fig. 1.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

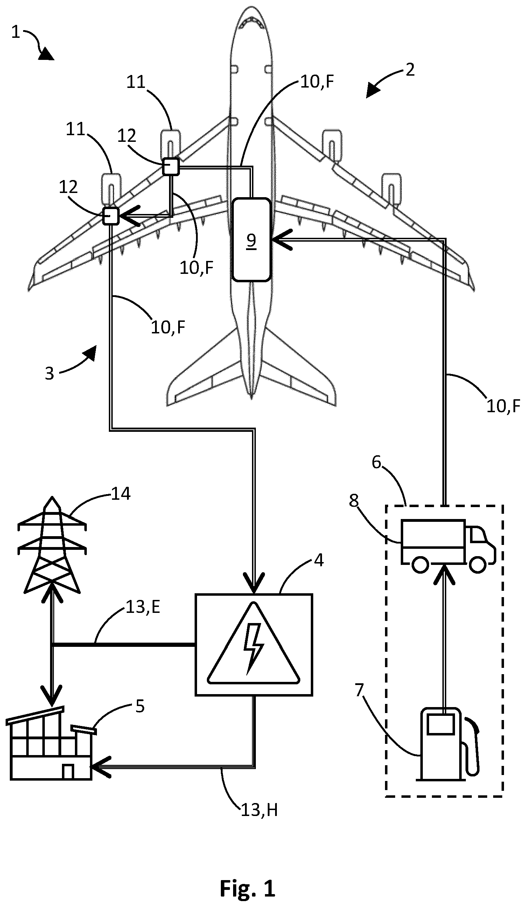

Fig. 1 is a schematic illustration of an energy system 1 comprising a vehicle 2 in the form of an aircraft provided with a fuel conversion arrangement 3 connected to an external fuel conversion device 4 powering a ground installation 5, such as an airport. A fuel F is provided to the energy system 1 by means of a fuel source 6 which may comprise a stationary fuelling device 7 and/or a mobile fuelling device 8 connected to each other and/or to a fuel reservoir 9 of the vehicle 2 via respective fuel lines 10. The fuel reservoir 9 is connected via the fuel lines 10 to internal fuel conversion devices 11 of the vehicle 2 via respective fuel junctions 12.

The fuel junctions 12 may be provided such that they connect to another fuel line 10 in a serial and/or parallel manner which leads from the vehicle 2 to the external fuel conversion device 4. The external fuel conversion device 4 converts the fuel to electrical power E and/or thermal power H, i.e., heat, which are provided to the ground installation 5 via respective transmission lines 13. Alternatively, or additionally, electrical power E may be provided to and from a power grid 14.

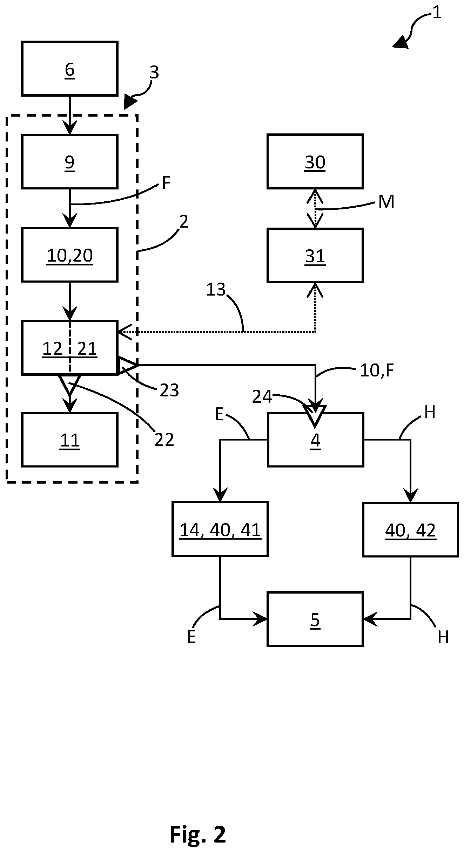

Fig. 2 is a schematic block diagram of the energy system 1 shown in Fig. 1. Here it becomes apparent that the fuel F provided from the fuel source 6 is first stored in the fuel reservoir 9 of the vehicle 2 and then led from a fuel outlet of the fuel reservoir 9 through an internal fuel distribution system 20 of the vehicle 2 comprising respective fuel lines 10. When reaching the fuel junction 12, the fuel F may be led to the internal fuel conversion device 11 and/or to the external fuel conversion device 4. Therefore, the fuel junction 12 may comprise a switch valve 21. The switch valve 21 may be operated to direct the fuel F to a main fuel outlet to a main fuel outlet 22 leading to the internal fuel conversion device 11 and/or to an auxiliary fuel outlet 23 of the fuel supply arrangement 3 connected to an auxiliary fuel inlet 24 of the external fuel conversion device 4 via respective fuel line 10 for the fuel F. The fuel line 10 for connecting the auxiliary fuel outlet 23 to the auxiliary fuel inlet may at least partly arranged outside of the vehicle 2 and/or the external fuel conversion device 4.

The energy system 1 may further comprise at least one control unit 30 unit and a sensor 31 connected to the control unit 30 via a respective transmission line 13. The control unit 30 and sensor 31 may be part of the vehicle 2, the internal fuel distribution system 20 and/or of the external fuel conversion device 11. The sensor 31 can provide at least one measurement value X which may represent at least one temperature value, pressure value, or alike, based on which the switch valve 21 may be actuated in order to provide the fuel F to the main fuel outlet 22 and/or the auxiliary fuel outlet 23. Fuel F provided to the auxiliary fuel input 24 of the external fuel conversion device 4 can be converted to provide the electrical power E and/or the thermal power H to the ground installation 5 via respective distribution networks 40 thereof, which may comprise an electricity network 41 connected to or including the power grid 14 and/or a thermal network 42, respectively, for local and/or remote distribution and consumption of respective energy generated by converting the fuel F.

### List of Reference Signs

- 1: energy system
- 2: vehicle / aircraft
- 3: fuel supply arrangement
- 4: external fuel conversion device
- 5: ground installation
- 6: fuel source
- 7: stationary fuelling device
- 8: mobile fuelling device
- 9: fuel reservoir
- 10: fuel line
- 11: internal fuel conversion device
- 12: fuel junction
- 13: transmission line
- 14: power grid

- 20: internal fuel distribution system
- 21: switch valve
- 22: main fuel outlet
- 23: auxiliary fuel output
- 24: auxiliary fuel input

- 30: control unit
- 31: sensor

- 40: distribution network
- 41: electricity network
- 42: thermal network

- E: electrical power
- F: fuel
- H: thermal power / heat
- X: measurement value

## Claims

1. Fuel supply arrangement (3) for a vehicle (2), in particular an aircraft, comprising
a fuel reservoir (9) for storing a fuel (F), such as a hydrogen tank for storing hydrogen as the fuel (F),
a main fuel outlet (22) for fuelling an internal fuel conversion device (11), such as a propulsion unit (5) and/or fuel cell, of the vehicle (2),
an auxiliary fuel outlet (23) configured to be connected to an external fuel conversion device (4), such as a cogeneration plant for supplying a ground installation with electrical power (E) and/or thermal power (H), and
a fuel line (10) leading from a reservoir outlet of the fuel reservoir (9) to the main fuel outlet (22),
wherein the auxiliary fuel outlet (23) is connected to the fuel line (10) via a fuel junction (12) arranged between the reservoir outlet and the main fuel outlet (22).

2. Fuel supply arrangement (3) according to claim 1, wherein the fuel junction (12) comprises at least one switch valve (21) for switching a fuel flow from the reservoir outlet to the main fuel outlet (22) and/or the auxiliary fuel outlet (23).

3. Fuel supply arrangement (3) according to claim 2, wherein the switch valve (21) allows for gradual switching of the fuel flow.

4. Fuel supply arrangement (3) according to claim 2 or 3, wherein the switch valve (21) allows for a steplessly variable switching of the fuel flow.

5. Fuel supply arrangement (3) according to at least one of claims 1 to 4, wherein the fuel junction (12) is arranged in the vicinity of the main fuel outlet (22).

6. Fuel supply arrangement (3) according to claim 5, wherein the fuel junction (12) is arranged within the internal fuel conversion device (11).

7. Fuel supply arrangement (3) according to at least one of claims 1 to 6, wherein the fuel junction (12) comprises the main fuel outlet (22) and/or the auxiliary fuel outlet (23).

8. Fuel supply arrangement (3) according to at least one of claims 1 to 7, further comprising at least one sensor (31) for providing at least one measurement value (X) representing a temperature value and/or pressure value of the fuel (F) and/or the fuel supply arrangement (3).

9. Fuel supply arrangement (3) according to claim 8, further comprising a control unit (30) configured to adjust an auxiliary fuel flow discharged from the auxiliary fuel outlet (23) based on the at least one measurement value (X).

10. Fuel supply arrangement (3) according to claim 9, wherein the control unit (30) is configured to keep the at least one measurement value (X) within a pre-defined value range, and/or above or below a predefined value limit.

11. Vehicle (1), in particular an aircraft, comprising a fuel supply arrangement (3) according to at least one of claims 1 to 10.

12. External fuel conversion device (4), in particular for ground based and/or stationary fuel conversion of a fuel (F) for a vehicle (1), such as an aircraft, comprising an auxiliary fuel inlet (24) configured to be connected to an auxiliary fuel outlet (23) of a fuel supply arrangement according to at least one of claims 1 to 10 and/or of a vehicle (1) according to claim 11.

13. External fuel conversion device (4) according to claim 12, wherein the external fuel conversion device (4) is configured to convert the fuel (F) received through the auxiliary fuel input (24) and to provide electrical power (E) and/or thermal power (H) to a ground installation (5), such as an airport.

14. External fuel conversion device (4) according to claim 12, further comprising a metering unit for metering the fuel (F) received through the auxiliary fuel input (24) and/or the electrical power (E) and/or thermal power (H) provided.

15. Energy system (2) comprising a fuel supply arrangement (3) according to at least one of claims 1 to 10, a vehicle (1) according to claim 11, and/or an external fuel conversion device (4) according to at least one of claims 12 to 14.
